# EUROPEAN PATENT SPECIFICATION

(11) **EP 2 803 548 B1**
(45) Date of publication and mention of the grant of the patent: **05.04.2017**
(21) Application number: 14167485.3
(22) Date of filing: 08.05.2014
(51) Int. Cl.: B60W 30/14, B60W 50/02, B60W 10/04

(54) **Vehicle speed control apparatus**
Fahrzeuggeschwindigkeitsregelungsvorrichtung
Appareil de commande de vitesse de véhicule

(30) Priority: 13.05.2013 JP 2013101608
(43) Date of publication of application: 19.11.2014
(73) Proprietor: Toyota Jidosha Kabushiki Kaisha, Toyota-shi, Aichi-ken 471-8571 (JP)
(72) Inventor: Sumi, Kazuaki, Aichi-ken, 471-8571 (JP)
(74) Representative: D Young & Co LLP

(56) References cited:
- JP-A- H04 321 733
- US-A- 5 054 570
- US-A1- 2009 111 652

## Description

### FIELD

This disclosure is related to a vehicle speed control apparatus.

### BACKGROUND

A document "Isa- UK intelligence speed adaptation: Final Report, the. University of Leeds and MIRA Ltd, June 2008" Final Report, the. University of Leeds and MIRA Ltd, June 2008" discloses a driving force limiting control which limits a driving force of a vehicle such that a set upper limit speed is not exceeded.

However, if the limitation of the driving force of the vehicle is canceled immediately after a cancel condition of the driving force limiting control is met due to a failure during a situation in which the driving force of the vehicle is being limited due to the driving force limiting control, temporary acceleration of the vehicle may occur.

Therefore, the disclosure is directed to providing a vehicle speed control apparatus which can prevent temporary acceleration of a vehicle in canceling a driving force limiting control.

JP H04 321733 A relates to a speed control device for vehicle which switches from a constant-speed driving mode to a safety deceleration mode if an abnormality, for example a sensor failure, is detected.

US 2009/111652 A1 relates to a vehicle speed limiting via engine control commands issued by electronic transmission controller.

US 5 054 570 A relates to a cruise control apparatus for vehicle.

### SUMMARY

According to one aspect of the disclosure, a vehicle speed control apparatus is provided which performs a driving force limiting control for limiting a driving force of a vehicle such that a set upper limit speed is not exceeded, wherein

if a cancel condition of the driving force limiting control is met under a situation in which the driving force of the vehicle is being limited due to the driving force limiting control, the vehicle speed control apparatus reduces a vehicle speed, and if the vehicle speed control apparatus detects an acceleration intention of a driver while reducing the vehicle speed, it increases the driving force of the vehicle to cancel the driving force limiting control.

### BRIEF DESCRIPTION OF DRAWINGS

Fig. 1 is a diagram for schematically illustrating a configuration of a vehicle speed control apparatus 1 according to an embodiment.
Fig. 2 is an example of a flowchart of a process executed by the vehicle speed control apparatus 1.
Fig. 3 is a diagram for an explanation of Fig. 2, and illustrating an example of a relationship between an ASL driving force and a driver demand driving force until an ASL control is ended.
Fig. 4 is a diagram for a comparative example, and illustrating an example of a relationship between an ASL driving force and a driver demand driving force until an ASL control is ended is illustrated.

### DESCRIPTION OF EMBODIMENTS

In the following, embodiments are described in detail with reference to appended drawings.

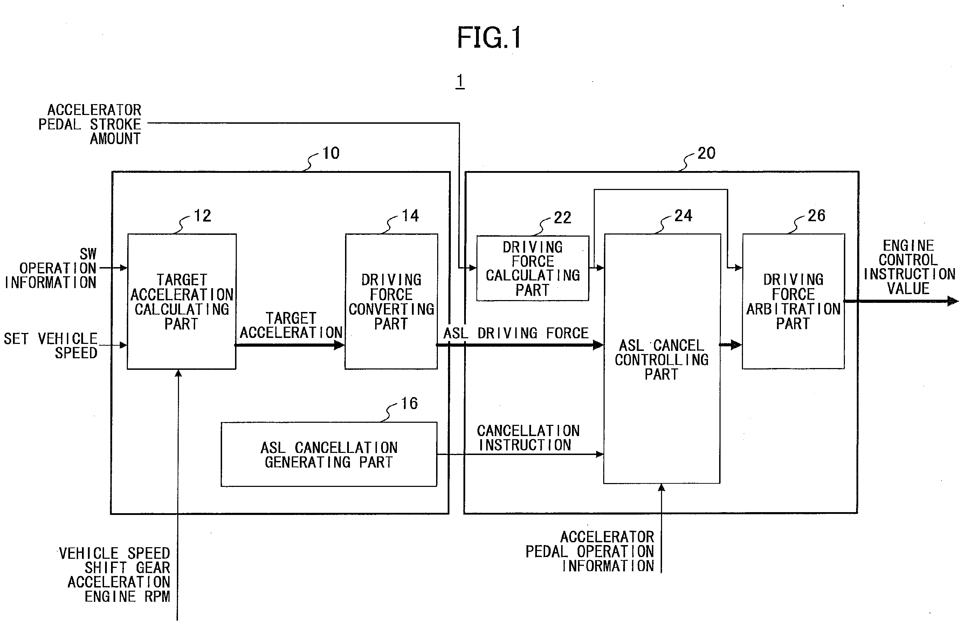

Fig. 1 is a diagram for schematically illustrating a configuration of a vehicle speed control apparatus 1 according to an embodiment. The vehicle speed control apparatus 1 is installed on a vehicle. The vehicle may be a vehicle whose driving source is only an engine, or an electric vehicle. A type of the electric vehicle or a detailed configuration of the electric vehicle may be arbitrary as long as the electric vehicle is driven with a traveling motor using electric power. Typically, the electric vehicle includes a hybrid vehicle (HV) which uses an internal combustion engine and the traveling motor as a power source and a genuine electric vehicle which uses the traveling motor only as a power source. In the following, as an example, it is assumed that the vehicle speed control apparatus 1 is installed in a vehicle which only uses an internal combustion engine as a power source.

The vehicle speed control apparatus 1 includes an ASL (Adjustable Speed Limiter) module 10, and an EFI (Electrical Fuel Injection) module 20. The ASL module 10 and the EFI module 20 may be connected directly or via an appropriate bus such as a CAN(controller area network). The ASL module 10 and the EFI module 20 may be formed by ECUs (Electronic Control Units), respectively. It is noted that the ASL is a function of limiting a driving force of a vehicle such that a set vehicle speed, which is set by a user, is not exceeded. In the following, a control for implementing the ASL function is referred to as "an ASL control".

To the ASL module 10 are input vehicle speed information, shift gear information, acceleration information and engine rpm information. Further, to the ASL module 10 are input information (SW operation information) about switch operations related to the ASL and set vehicle speed information.

The vehicle speed information may be based on vehicle wheel speed sensors provided in the respective wheels of the vehicle. The vehicle speed information may be based on other information such as information about the number of revolutions of an output shaft of a transmission. The shift gear information may be based on a sensor which detects a position of a shift lever (i.e., a shift position). The acceleration information may be based on a differential (derivative time) of the vehicle speed based on the vehicle speed information. The acceleration information may be generated in the ASL module 10. The engine rpm information may be based on information from a sensor which detects the number revolutions of the engine, or based on other information such as information about the number of revolutions of an input shaft of the transmission.

The SW operation information may include a variety of operation information items with respect to switches (not illustrated) which are provided for setting the set vehicle speed related to the ASL. Various operations related to the SW operation information may include ON/OFF operations for the ASL function, an operation for changing the set vehicle speed, an operation for restoring the set vehicle speed to the original (previous) value, etc., for example. The set vehicle speed information may represent the set vehicle speed related to the ASL.

To the EFI module 20 is input information which represents an accelerator pedal stroke amount. The accelerator pedal stroke amount may be detected by a sensor which detects a driver's operation amount of the accelerator pedal.

The ASL module 10 includes a target acceleration calculating part 12, a driving force converting part 14, and an ASL cancellation generating part 16. The EFI module 20 includes a driving force calculating part 22, an ASL cancel controlling part 24, and a driving force arbitration part 26. It is noted that the function of the ASL module 10 may be implemented by a plural of ECUs in cooperation. A part of the function of the EFI module 20 may be implemented by the ASL module 10, and a part of or a whole of the function of the ASL module 10 may be implemented by the EFI module 20.

The target acceleration calculating part 12 of the ASL module 10 calculates a target acceleration with respect to the set vehicle speed based on the set vehicle speed information, the vehicle speed information and the acceleration information. For example, the target acceleration may be calculated, based on the difference between the set vehicle speed and the current vehicle speed, as an upper limit acceleration such that the vehicle speed does not exceed the set vehicle speed. Thus, basically, the target acceleration may be calculated such that the greater the difference between the set vehicle speed and the current vehicle speed becomes, the greater the target acceleration becomes. In this case, the target acceleration may be feedback-controlled based on the difference with respect to the current acceleration. Further, the target acceleration may be calculated such that a road slope, a traveling resistance, etc., are considered.

The driving force converting part 14 of the ASL module 10 converts the target acceleration calculated by the target acceleration calculating part 12 into a dimension of a driving force to output an ASL driving force. The ASL driving force means an upper limit value of the driving force with which the vehicle speed does not exceed the set vehicle speed.

The ASL cancellation generating part 16 of the ASL module 10 monitors whether a predetermined ASL control cancellation condition is met, and if the ASL control cancellation condition is met, the ASL cancellation generating part 16 outputs a cancellation instruction. The ASL control cancellation condition is to be met in a circumstance where the ASL control should be canceled due to any abnormality (failure), and may be set in any manner. For example, the ASL control cancellation condition may be met if the acquisition of (communication for) the vehicle speed information is stopped, abnormality in a driving system such as the engine or the transmission is detected, or the like. When the cancellation instruction is generated, an alarm may be output in an acoustic or visual manner so as to inform a driver of the fact that the ASL control is to be canceled.

The driving force calculating part 22 of the EFI module 20 calculates a driving force (also referred to as "a driver demand driving force", hereinafter) according to the accelerator pedal stroke amount (i.e., the driver's operation amount of the accelerator pedal). For example, the driving force calculating part 22 may calculate the target acceleration based on the current vehicle speed and the accelerator pedal stroke amount, and convert the calculated target acceleration into the driver demand driving force. Alternatively, the driving force calculating part 22 may merely use a two-dimensional map in which a relationship between the accelerator pedal stroke amount and the target acceleration to calculate the target acceleration, and convert the calculated target acceleration into the driver demand driving force. It is noted that the driving force calculating part 22 may calculate the driver demand driving force directly (i.e., without calculating the target acceleration) based on the accelerator pedal stroke amount, etc.

The ASL cancel controlling part 24 of the EFI module 20 cancels (stops) the ASL control in response to the cancellation instruction from the ASL module 10. In this case, the ASL cancel controlling part 24 cancels the ASL control in response to the cancellation instruction such that temporary acceleration does not occur. This function of the ASL cancel controlling part 24 is described hereinafter in detail. In the example illustrated in Fig. 1, the ASL cancel controlling part 24 performs a correction, etc., of the ASL driving force from the ASL module 10 only if the ASL cancel controlling part 24 receives the cancellation instruction from the ASL module 10. Thus, the ASL driving force is passed to the driving force arbitration part 26 as it is if the ASL cancel controlling part 24 does not receive the cancellation instruction from the ASL module 10.

The driving force arbitration part 26 of the EFI module 20 performs arbitration between the driver demand driving force from the driving force calculating part 22 and the ASL driving force from the ASL module 10 (or the ASL driving force from the ASL cancel controlling part 24). In this case, the driving force arbitration part 26 selects (adopts) the smaller of the driver demand driving force and the ASL driving force. In other words, the driving force arbitration part 26 performs a minimum selection between the driver demand driving force and the ASL driving force. The driving force arbitration part 26 generates an engine control instruction value based on the selected driving force to control the engine (not illustrated). The control of the engine may be performed in any manner. For example, it may include controlling an opening amount (throttle position) of a throttle valve disposed in an intake manifold of the engine, controlling an amount of fuel injected into a combustion chamber of the engine, controlling a phase of an intake cam shaft to adjust a valve opening/closing timing, etc.

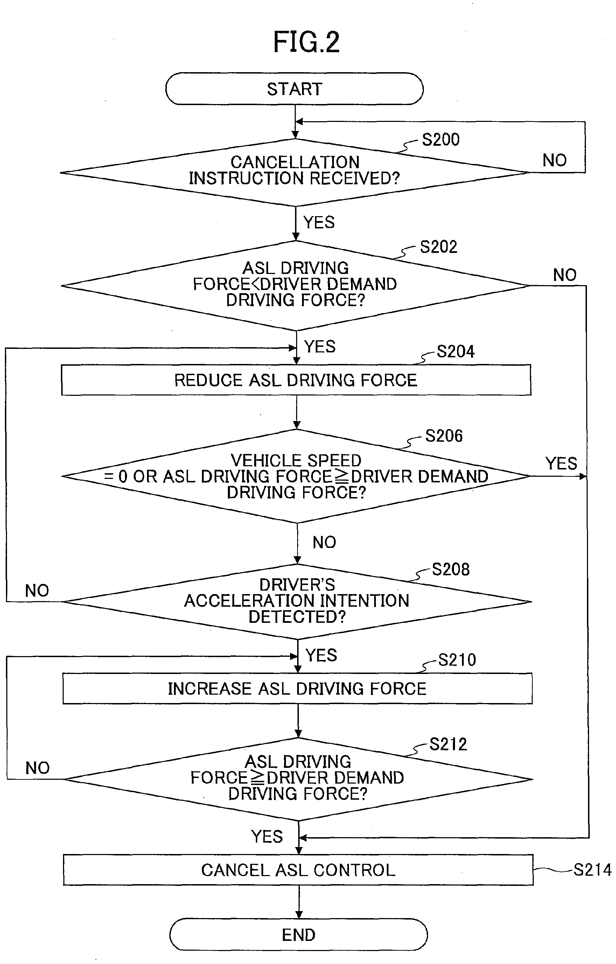

Fig. 2 is an example of a flowchart of a process executed by the vehicle speed control apparatus 1 (the ASL cancel controlling part 24). A process routine illustrated in Fig. 2 may be executed repeatedly at a predetermined cycle during an operation of the ASL control.

In step S200, the ASL cancel controlling part 24 determines whether the ASL cancel controlling part 24 receives the cancellation instruction from the ASL cancellation generating part 16. As described above, the cancellation instruction is generated in the ASL cancellation generating part 16 if the predetermined ASL control cancellation condition is met, and is received by the ASL cancel controlling part 24. If the ASL cancel controlling part 24 receives the cancellation instruction from the ASL cancellation generating part 16, the process routine goes to step S202. On the other hand, if the ASL cancel controlling part 24 does not receive the cancellation instruction from the ASL cancellation generating part 16, a waiting status for the cancellation instruction is formed. In this case, the ASL cancel controlling part 24 does not function, and thus the ASL driving force from the ASL module 10 is supplied to the driving force arbitration part 26 as it is.

In step S202, the ASL cancel controlling part 24 determines whether the ASL driving force from the ASL module 10 is less than the driver demand driving force. If the ASL driving force from the ASL module 10 is less than the driver demand driving force, the process routine goes to step S204. On the other hand, if the ASL driving force from the ASL module 10 is greater than or equal to the driver demand driving force, the process routine goes to step S214 where the ASL cancel controlling part 24 ends (i.e., completes canceling) the ASL control. This is because the fact that the ASL driving force is greater than or equal to the driver demand driving force means that the limitation of the driving force based on the ASL control is not being performed. In this case, since a status where the driving force is controlled based on the driver demand driving force has already been formed, there is no influence on the driving force of the vehicle even if the ASL control is immediately canceled.

In step S204, the ASL cancel controlling part 24 reduces the ASL driving force. The ASL driving force is reduced such that the current vehicle speed is reduced (i.e., deceleration generates). The ASL driving force may be reduced by subtracting a predetermined amount from the previous value of the ASL driving force every control cycle, using, as an initial value, the value of the ASL driving force at the time when the ASL control cancellation condition is met or immediately after that. Alternatively, the ASL driving force may be reduced in a nonlinear manner. For example, the ASL driving force may be determined such that the vehicle speed is reduced with a constant gradient. In this way, after step S204, the ASL driving force from the ASL module 10 is substantially invalidated (i.e., the ASL module 10 is invalidated), and thus the ASL cancel controlling part 24 determines the ASL driving force until the end of the ASL control at step S214.

In step S206, the ASL cancel controlling part 24 determines whether the vehicle speed is reduced to 0, or whether the ASL driving force determined at step S204 (i.e., the reduced ASL driving force) becomes greater than or equal to the driver demand driving force. If the vehicle speed is not reduced to 0 and the ASL driving force determined at step S204 does not become greater than or equal to the driver demand driving force, the process routine goes to step S208. On the other hand, if the vehicle speed is reduced to 0, or if the ASL driving force determined at step S204 becomes greater than or equal to the driver demand driving force, the process routine goes to step S214 where the ASL cancel controlling part 24 ends (i.e., completes canceling) the ASL control. This is because if the driver demand driving force is reduced such that the ASL driving force becomes greater than or equal to the reduced driver demand driving force, the driver demand driving force is to be selected in the driving force arbitration part 26 and thus the limitation of the driving force based on the ASL control is ended. Further, this is because if the vehicle speed has been reduced to 0, there is no influence on the behavior of the vehicle even if the limitation of the driving force based on the ASL control is ended at that time.

In step S208, the ASL cancel controlling part 24 determines whether the ASL cancel controlling part 24 detects an acceleration intention of the driver. The acceleration intention of the driver may be detected in any manner. Typically, the acceleration intention of the driver is detected based on operation information of the accelerator pedal. For example, the acceleration intention of the driver may be detected if the driver demand driving force (which is determined according to the accelerator pedal stroke amount) is increased by an amount which is greater than or equal to a predetermined threshold, or if a kick down switch is turned on. The kick down switch may be turned on when the accelerator pedal is in its full-open position. The predetermined threshold may correspond to the increased amount of the driver demand driving force which represents the acceleration intention of the driver, and may be adapted based on experience results or the like. The increased amount of the driver demand driving force greater than or equal to the predetermined threshold may be determined with reference to the driver demand driving force at the time of starting to reduce the vehicle speed at step S204 or with reference to the previous value of the driver demand driving force. Alternatively, the acceleration intention of the driver may be detected if the driver demand driving force is increased with a gradient greater than or equal to a predetermined gradient, or if the accelerator pedal stroke amount is increased with a gradient greater than or equal to a predetermined gradient. If the acceleration intention of the driver is detected, the process routine goes to step 210. Otherwise the process routine returns to step 204. In this way, the ASL driving force is gradually reduced until the vehicle speed has been reduced to 0, the ASL driving force from the ASL module 10 becomes greater than or equal to the driver demand driving force, or the acceleration intention of the driver is detected.

In step S210, the ASL cancel controlling part 24 increases the ASL driving force. The ASL driving force may be increased by adding a predetermined value to the previous value of the ASL driving force every control cycle. Alternatively, the ASL driving force may be increased in a nonlinear manner. For example, the increased amount of the ASL driving force at the respective control cycles may be determined according to the difference between the current ASL driving force and the driver demand driving force. In this case, the increased amount of the ASL driving force may be set such that the greater the difference between the current ASL driving force and the driver demand driving force becomes, the greater the increased amount of the ASL driving force becomes.

In step S212, the ASL cancel controlling part 24 determines whether the ASL driving force determined at step S210 (i.e., the increased ASL driving force) is greater than or equal to the driver demand driving force. If the ASL driving force determined at step S210 does not become greater than or equal to the driver demand driving force, the process routine returns to step S210, and the process of step S210 is to be performed at next control cycle. On the other hand, if the ASL driving force determined at step S210 becomes greater than or equal to the driver demand driving force, the process routine goes to step S214 where the ASL cancel controlling part 24 ends (complete canceling) the ASL control. This is because if the ASL driving force is increased to be greater than or equal to the reduced driver demand driving force, the driver demand driving force is to be selected in the driving force arbitration part 26 and thus the limitation of the driving force based on the ASL control is ended.

It is noted that if the ASL control is ended at step S212, a driving status based on the driver demand driving force is formed. In this case, as long as the ASL control cancellation condition is still met, the ASL cancel controlling part 24 may continue to invalidate the ASL driving force such that the ASL driving force is not reduced below the driver demand driving force (i.e., such that the canceled status of the ASL control is continued). The invalidation of the ASL driving force may be implemented by continuing to output a predetermined ASL driving force, which is greater than a possible maximum valued of the driver demand driving force, to the driving force arbitration part 26, for example.

Further, if the ASL control cancellation condition is not met and a ASL control starting condition (restarting condition) is met after the ASL control is ended at step S212, the ASL control may be restarted. In this case, the ASL cancel controlling part 24 may not function and thus the ASL driving force from the ASL module 10 may be supplied to the driving force arbitration part 26 as it is until the ASL cancel controlling part 24 receives the cancellation instruction from the ASL cancellation generating part 16.

According to the process illustrated in Fig. 2, if the ASL control cancellation condition is met during the driving force being limited by the ASL driving force (Yes in step S202), the ASL driving force is reduced at first (step S204), instead of immediately canceling the driving force limitation by the ASL function to form the driving status based on the driver demand driving force. When the ASL driving force is reduced, a driver, who has the acceleration intention, may be aware of the deceleration and then increase the pressing amount of the accelerator pedal to implement the acceleration. In this case, the determination result at step S208 is affirmative, and thus the ASL driving force is gradually increased in response to the acceleration intention of the driver. As a result of this, the ASL control is ended (cancellation is completed) when the ASL driving force becomes greater than or equal to the driver demand driving force (Yes in step S212).

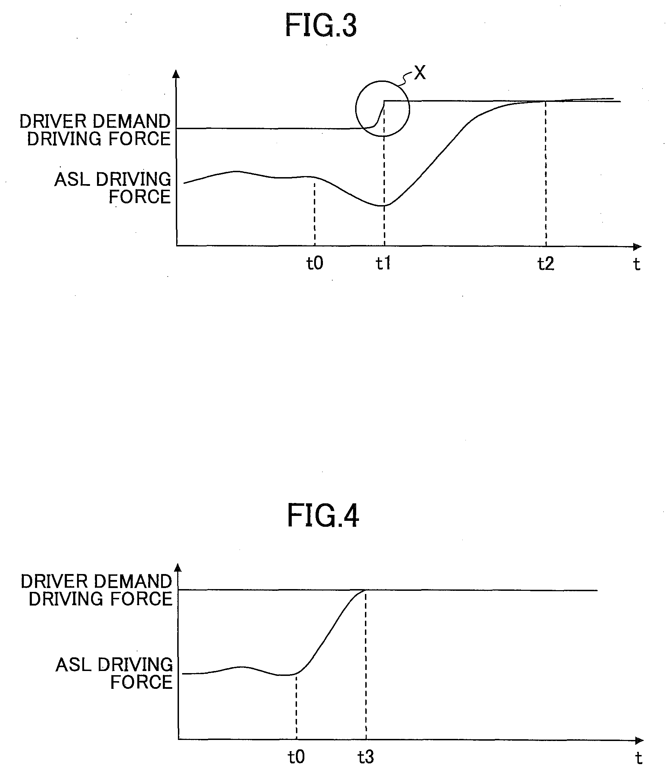

Fig. 3 is a diagram for an explanation of Fig. 2, and illustrating an example of a relationship between the ASL driving force and the driver demand driving force until the ASL control is ended.

In the example illustrated in Fig. 3, before time t0, the ASL control cancellation condition is not met and the ASL driving force is less than the driver demand driving force, and thus a status where the driving force is limited by the ASL function is formed. Further, before time t0, the ASL driving force from the ASL module 10 is supplied to the driving force arbitration part 26 as it is. When the ASL control cancellation condition is met at time t0, the determination in step S200 becomes affirmative, the determination in step S202 becomes affirmative, and the ASL driving force is reduced by the ASL cancel controlling part 24 in step S204. Therefore, as illustrated in Fig. 3, the ASL driving force is gradually reduced from time t0 and the vehicle is decelerated accordingly. At that time, a driver, who has the acceleration intention, may be aware of the deceleration and then increase the pressing amount of the accelerator pedal to implement the acceleration. In the example illustrated in Fig. 3, as indicated by an X portion, at time t1, the acceleration intention of the driver is detected due to the increase in the operation amount of the accelerator pedal by the driver (i.e., the increase in the driver demand driving force). Accordingly, in step S210, the driver demand driving force is increased by the ASL cancel controlling part 24. Therefore, as illustrated in Fig. 3, the ASL driving force is gradually increased from time t1 and the vehicle is accelerated accordingly. Afterward, at time t2, the ASL driving force reaches the driver demand driving force, and thus the ASL control is ended (cancellation is completed).

Fig. 4 is a diagram for a comparative example, and illustrating an example of a relationship between the ASL driving force and the driver demand driving force until the ASL control is ended is illustrated.

In this comparative example, as illustrated in Fig. 4, when the ASL control cancellation condition is met at time t0, the ASL driving force is immediately increased toward the driver demand driving force to cancel the limitation of the driving force by the ASL function. At time t3, the ASL driving force reaches the driver demand driving force, and thus the ASL control is ended (cancellation is completed).

According to such a comparative example, if the ASL control cancellation condition is met in a circumstance where the driver demand driving force is greater than the ASL driving force (i.e., the driving force is being limited using the ASL driving force), the ASL driving force is increased toward the driver demand driving force, and thus the vehicle speed is increased temporarily.

In contrast, according to the present embodiment, if the ASL control cancellation condition is met in a circumstance where the driver demand driving force is greater than the ASL driving force, the ASL driving force is reduced at first, and thus the vehicle speed is reduced. With this arrangement, it becomes possible to prevent the temporary acceleration which otherwise would occur at the time of the ASL control cancellation condition being met. Further, according to the present embodiment, if the driver has the acceleration intention, the ASL control is ended by utilizing the fact the driver increases the pressing amount of the accelerator pedal in response to the reduction in the vehicle speed. In other words, the vehicle speed is reduced at first, and then if the acceleration intention of the driver is detected, the ASL driving force is increased toward the driver demand driving force, and thus the vehicle speed is increased. With this arrangement, it becomes possible to end the ASL control by increasing the vehicle speed such that the intention of the driver is reflected.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the scope of the invention. Further, all or part of the components of the embodiments described above can be combined.

For example, according to the embodiment described above, the ASL control is performed based on the set vehicle speed set by the driver to limit the driving force such that the vehicle speed does not exceed the set vehicle speed; however, the set vehicle speed may be automatically set as is the case with ISA (Intelligent Speed Assistance). For example, the set vehicle speed may be set automatically based on limit speed information which may be obtained by communication with an external facility (including a center server) such as an infrastructure and represents the limit speed with respect to the road on which the vehicle is currently traveling. Further, the set vehicle speed may be set automatically based on limit speed information of a road sign which may be image-recognized using a vehicle-installed camera or the like.

Further, in the embodiment described above, the acceleration intention of the driver may be detected by various ways other than the ways described above. For example, the acceleration intention of the driver may be detected if the lane in which the vehicle is traveling is changed to a passing lane. In this case, such a lane change may be detected based on map data (lane information) of a navigation apparatus, a white line recognition result by the vehicle-installed camera, operation information of a blinker lever (a turn signal lever), or the like.

Further, in the embodiment described above, the driver demand driving force and the ASL driving force are subject to the arbitration in a unit of a driving force; however, they may be subject to the arbitration in other units such as a driving torque, a target acceleration, a throttle position. For example, in the case of the electric vehicle, a driver demand driving torque and an ASL driving torque (an upper limit value of the driving torque with which the vehicle speed does not exceed the set vehicle speed) may be used instead of the driver demand driving force and the ASL driving force.

Further, in the embodiment described above, since it is assumed that the vehicle includes the engine, the EFI module 20 is provided; however, in the case of the electric vehicle, there is no EFI module 20. In this case, the function of the EFI module 20 (the function of the ASL cancel controlling part 24, for example) may be implemented by other ECU(s).

Further, in the embodiment described above, the ASL driving force from the ASL module 10 is invalidated such that the ASL cancel controlling part 24 determines (corrects) the ASL driving force in canceling the ASL control. However, the function of the ASL cancel controlling part 24 may be implemented by the ASL module 10, as described above. In this case, after step 204 in Fig. 2, the ASL module 10 may supply the corrected ASL driving force, which is obtained based on the function of the ASL cancel controlling part 24, to the driving force arbitration part 26 of the EFI module 20.

Further, according to the process illustrated in Fig. 2, in a circumstance where the vehicle speed is not reduced to 0 and the ASL driving force from the ASL module 10 does not become greater than or equal to the driver demand driving force, the ASL driving force is reduced continuously until the acceleration intention of the driver is detected (see step S204). However, in a circumstance where the vehicle speed is not reduced to 0 and the ASL driving force from the ASL module 10 does not become greater than or equal to the driver demand driving force, the ASL driving force may be reduced in other manner. For example, as an equivalent embodiment, the ASL driving force may be reduced and held (to be constant) alternately every predetermined control cycle. Further, reducing and holding may be repeated at random intervals, such as reducing for a certain term, holding for a predetermined time, and then reducing again.

## Claims

1. A vehicle speed control apparatus (1) that performs a driving force limiting control for limiting a driving force of a vehicle such that a set upper limit speed is not exceeded, if a cancel condition of the driving force limiting control is met under a situation in which the driving force of the vehicle is being limited due to the driving force limiting control, the vehicle speed control apparatus (1) reduces a vehicle speed, and if the vehicle speed control apparatus (1) detects an acceleration intention of a driver while reducing the vehicle speed, it increases the driving force of the vehicle to cancel the driving force limiting control.

2. The vehicle speed control apparatus (1) of claim 1, wherein the acceleration intention of the driver is detected based on a operation information of an accelerator pedal.

3. The vehicle speed control apparatus (1) of claim 1, wherein the vehicle speed control apparatus (1) calculates an upper limit valve related to the driving force of the vehicle and a demand value related to the driving force of the vehicle during performing the driving force limiting control, the upper limit valve being calculated such that the upper limit speed is not exceeded, the demand value being calculated based on an operation amount of an accelerator pedal, and if the demand value is greater than the upper limit value, the vehicle speed control apparatus (1) limits the driving force of the vehicle based on the upper limit value.

4. The vehicle speed control apparatus (1) of claim 3, wherein increasing the driving force of the vehicle is implemented by increasing the upper limit value, and
if the upper limit value is increased to correspond to the demand value, the vehicle speed control apparatus (1) cancels the driving force limiting control.

5. The vehicle speed control apparatus (1) of claim 3 or 4, wherein decreasing the driving force of the vehicle is implemented by decreasing the upper limit value with a predetermined gradient.

6. The vehicle speed control apparatus (1) of one of claims 3 through 5, wherein increasing the driving force of the vehicle is implemented by increasing the upper limit value with a predetermined gradient.

## Patentansprüche

1. Fahrzeuggeschwindigkeitssteuergerät (1), das eine Antriebskraftbegrenzungssteuerung zur Begrenzung einer Antriebskraft eines Fahrzeuges derart durchführt, dass eine festgelegte obere Begrenzungsgeschwindigkeit nicht überschritten wird, wobei,
falls eine Abbruchbedingung der Antriebskraftbegrenzungssteuerung in einer Situation erfüllt ist, bei der die Antriebskraft des Fahrzeuges aufgrund der Antriebskraftbegrenzungssteuerung begrenzt ist, das Fahrzeuggeschwindigkeitssteuergerät (1) eine Fahrzeuggeschwindigkeit verringert, und,
falls das Fahrzeuggeschwindigkeitssteuergerät (1) während einer Verringerung der Fahrzeuggeschwindigkeit eine Beschleunigungsabsicht eines Fahrers erfasst, es zum Abbrechen der Antriebskraftbegrenzungssteuerung die Antriebskraft des Fahrzeuges erhöht.

2. Fahrzeuggeschwindigkeitssteuergerät (1) nach Anspruch 1, wobei die Beschleunigungsabsicht des Fahrers auf der Grundlage einer Betätigungsinformation eines Gaspedals erfasst wird.

3. Fahrzeuggeschwindigkeitssteuergerät (1) nach Anspruch 1, wobei das Fahrzeuggeschwindigkeitssteuergerät (1) einen oberen Begrenzungswert hinsichtlich der Antriebskraft des Fahrzeugs und einen Anforderungswert hinsichtlich der Antriebskraft des Fahrzeuges während der Durchführung der Antriebskraftbegrenzungssteuerung berechnet, wobei der obere Begrenzungswert derart berechnet ist, dass die obere Begrenzungsgeschwindigkeit nicht überschritten wird, der Anforderungswert auf der Grundlage einer Betätigungsausmaßes eines Gaspedals berechnet wird, und falls der Anforderungswert größer als der obere Begrenzungswert ist, das Fahrzeuggeschwindigkeitssteuergerät (1) die Antriebskraft des Fahrzeugs auf der Grundlage des oberen Begrenzungswertes begrenzt.

4. Fahrzeuggeschwindigkeitssteuergerät (1) nach Anspruch 3, wobei die Erhöhung der Antriebskraft des Fahrzeugs durch eine Erhöhung des oberen Begrenzungswertes implementiert ist, und
falls der obere Begrenzungswert zur Entsprechung mit dem Anforderungswert erhöht wird, das Fahrzeuggeschwindigkeitssteuergerät (1) die Antriebskraftbegrenzungssteuerung abbricht.

5. Fahrzeuggeschwindigkeitssteuergerät (1) nach Anspruch 3 oder 4, wobei die Verringerung der Antriebskraft des Fahrzeugs durch eine Verringerung des oberen Begrenzungswertes mit einem vorbestimmten Gradienten im plem entiert ist.

6. Fahrzeuggeschwindigkeitssteuergerät (1) nach einem der Ansprüche 3 bis 5, wobei die Erhöhung der Antriebskraft des Fahrzeugs durch eine Erhöhung des oberen Begrenzungswertes mit einem vorbestimmten Gradienten implementiert ist.

## Revendications

1. Appareil de commande de vitesse de véhicule (1) qui exécute une commande de limitation de force motrice afin de limiter une force motrice d'un véhicule de sorte qu'une vitesse limite supérieure définie ne soit pas dépassée,
si une condition d'annulation de la commande de limitation de force motrice est satisfaite dans une situation dans laquelle la force motrice du véhicule est limitée en raison de la commande de limitation de force motrice, l'appareil de commande de vitesse de véhicule (1) réduit la vitesse du véhicule, et si l'appareil de commande de vitesse de véhicule (1) détecte une intention d'accélération du conducteur tout en réduisant la vitesse du véhicule, il augmente la force motrice du véhicule afin d'annuler la commande de limitation de force motrice.

2. Appareil de commande de vitesse de véhicule (1) selon la revendication 1, dans lequel l'intention d'accélération du conducteur est détectée sur la base d'informations d'actionnement de la pédale d'accélérateur.

3. Appareil de commande de vitesse de véhicule (1) selon la revendication 1, dans lequel l'appareil de commande de vitesse de véhicule (1) calcule une valeur limite supérieure liée à la force motrice du véhicule et une valeur de demande liée à la force motrice du véhicule pendant l'exécution de la commande de limitation de force motrice, la valeur limite supérieure étant calculée de sorte que la vitesse limite supérieure ne soit pas dépassée, la valeur de demande étant calculée sur la base d'une quantité d'actionnement de la pédale d'accélérateur, et si la valeur de demande est supérieure à la valeur limite supérieure, l'appareil de commande de vitesse de véhicule (1) limite la force motrice du véhicule sur la base de la valeur limite supérieure.

4. Appareil de commande de vitesse de véhicule (1) selon la revendication 3, dans lequel l'augmentation de la force motrice du véhicule est mise en oeuvre en augmentant la valeur limite supérieure, et
si la valeur limite supérieure est augmentée afin de correspondre à la valeur de demande, l'appareil de commande de vitesse de véhicule (1) annule la commande de limitation de force motrice.

5. Appareil de commande de vitesse de véhicule (1) selon la revendication 3 ou 4, dans lequel la diminution de la force motrice du véhicule est mise en oeuvre en réduisant la valeur limite supérieure selon un gradient prédéterminé.

6. Appareil de commande de vitesse de véhicule (1) selon l'une quelconque des revendications 3 à 5, dans lequel l'augmentation de la force motrice du véhicule est mise en oeuvre en augmentant la valeur limite supérieure selon un gradient prédéterminé.
